# EUROPEAN PATENT SPECIFICATION

(11) **EP 3 217 151 B1**
(45) Date of publication and mention of the grant of the patent: **08.01.2020**
(21) Application number: 14905613.7
(22) Date of filing: 06.11.2014
(51) Int. Cl.: G01F 1/10, G01F 1/115

(54) **VELOCITY FLOWMETER AND METHOD FOR SETTING A ROTOR IN ROTATION**
STRÖMUNGSGESCHWINDIGKEITSMESSER UND VERFAHREN ZUM EINSTELLEN EINES ROTORS IN ROTATION
DÉBITMÈTRE TACHYMÉTRIQUE ET PROCÉDÉ POUR METTRE LE ROTOR EN ROTATION

(43) Date of publication of application: 13.09.2017
(73) Proprietor: OOO "ChelyabinskSpetsGrazhdanStroy", 454010 Chelyabinsk (RU)
(72) Inventor: SIZHUK, Vladimir Ivanovich, Miass, Chelyabinskaya obl. 456318 (RU)
(74) Representative: Spengler, Robert
(86) International application number: PCT/RU2014/000835
(87) International publication number: WO 2016/072876

(56) References cited:
- JP-A- S 608 716
- RU-C1- 2 122 710
- RU-C1- 2 239 161
- SU-A1- 1 470 664
- SU-A2- 907 394
- SU-A2- 1 040 335

## Description

A method for setting in motion the rotor of a velocity flow meter, using a flowing fluid, in which the flowmeter is fluid (liquid or gas)-dynamically suspended, as well as a velocity flowmeter based on the above method.

This invention relates to measurement technology for measuring flow rate of flowing media, and it can be used for designing flowmeters of flowing streams

There exists a method for setting in motion the spherical rotor of a velocity flowmeter by a flowing medium (liquid) by feeding that liquid into a working chamber with a spherical rotor inside, via tangentially positioned holes (p. p. Kremlevsky, "Flowmeters and Quantity Meters: Handbook. 4th edition, Leningrad. Mashinostroeniw, 1989; pp 301-302 (701 pages).

There also exists a method for setting in motion the rotor of a tapered velocity flowmeter. LIS-1 (Levitation Pulse Meter), using a flowing medium (gas) by feeding the gas via tangential holes arranged in specified spots of the cone, while having it gas-odynamically suspended (Tekhnika Molodezhi Journal No. 8, 2000, p. 6, "Komission-ka").

Document SU 1040335 A discloses a method of activating the rotor of a velocity flowmeter by a stream, which keeps the rotor hydro/gas-dynamically suspended The stream is directed through a working chamber, the cross section of which is bigger than the cross-sections of the inlet or outlet channels and which holds a spherical rotor with a diametric through-hole. The problem of precession of the axis of rotation of the spherical rotor is addressed by introducing an element for distorting fhe flow velocity profile before the working chamber.

The closest technical solution for setting in motion the rotor of a velocity flowmeter. using a flowing medium, which suspends it hydro (gas) dynamically is the method for hydrodynamic suspension and rotating a rotor with a going through diameter hole as described in the Patent 489951 MPK G01F1/10 (USSR): the spherical rotor is suspended by hydrodynamic forces generated by an arrangement of a submerged stream and transverse ring-shaped vortexes produced in the stream of liquid in a preordained spot in the work chamber inside the casing and holding the spherical rotor in the state of levitation (soaring) irrespective of velocity of the flow. It is also described n Patent 907394, International Classification G01F1/10 (USSR) and Patent 1040336 International Classification G01F1/10.

The advantages of turning the rotor of a velocity flowmeter while having t suspended by the flowing medium is the lack of rubbing (subjected to wear) supports with their braking effect, as well as solving the problem of relieving the axial pressure on the supports These advantages permit using this type of a velocity flowmeter in flowing media with mechanical impurities and in extreme working conditions, where it displays high reliability and accuracy in long-term usage.

The drawbacks of the devices designed on the basis of the above method of hydrodynamic suspension are:
- high hydraulic resistance;
- a limited range of working stream velocities;
- uneven rotation of a spherical rotor in the course of a single revolution and precession of its rotation axis;
- significant tendency of a spherical rotor to produce resonance in the working chamber ("Control Tools and Systems Journal" No. 12, 1985, pp. 17-18: "A Velocity Flowmeter, Using a Hydrodynamic Suspension of a Spherical Rotor", I. N. Ivanov (Engineer) and S. A. Zolotarevsky (PhD).

The present invention aims at devising a method for activating the rotor of a velocity flowmeter, using a flowing medium with its hydro (gas) dynamic suspension in the medium, eliminating the drawbacks of the existing constructions and achieving the following:
- reducing hydraulic resistance;
- extending the range of working velocities;
- evening up rotation of the spherical rotor per revolution, and the precession;
- preventing resonant step-up of the spherical rotor in the working chamber.

These goals were achieved by having the flowing medium that activates the rotor of a velocity flowmeter and its fluid-dynamic suspension in the working chamber twisted with a swirler before it reaches the working chamber and then converting it into a conical vortex inside the working chamber and placing the rotor inside it, thus reducing the precession of the rotation axis of the spherical rotor down to the value preventing its resonant step-up in the working chamber.

Besides, the flow velocity is evened out in the space between the rotor and the diffuser of the working chamber, then the stream is subdivided into equal parts, and each part is twisted along such a trajectory that ensures that the linear relationship between the revolution frequency of the rotor and velocity of the stream is maintained.

The invented method of activating the rotor of a velocity flowmeter by the flowing stream and its fluid (liquid or gas)-dynamic suspension is accomplished in two versions of flowmeter design.

According to Version 1, a velocity flowmeter of a stream includes a casing consisting of a working chamber with tapered diffuser and confuser, inlet and outlet channels, a hydrodynamically suspended in the working chamber magnetised spherical rotor with a diametrical through-hole, and a converter of the number of revolutions of the rotor into electrical signals. The casing is made from a diamagnetic material. The casing contains a prechamber, connected with the working chamber via the inlet channel. The prechamber holds a stream swirler, while the rotor contains a permanent magnet magnetised perpendicularly to the axis of its diametric hole. The stream swirler and rotor are mounted on the same axis, which represents a cantilever-type cylindrical shaft, made of a diamagnetic material. Two rings are fixed to the rod: one of them is made of a diamagnetic material and is mounted at the free end, while the other ring is made of a soft magnetic material and is mounted in the area where the inlet channel of the casing links with the tapered surface of the diffuser, and the diameter of the through-hole of the rotor is bigger than the diameter of the cylindrical shaft, while the outer surface of the casing carries fixedly mounted inductance coil wound onto the rod-type magnetic core and two end caps (pole caps) made out of soft magnetic material, symmetrically distributed in the zone of workpace displacements of the rotor, each one connected to one of the ends of the rod-type magnetic core of the inductance coil.

Besides, the stream swirler of the velocity flowmeter is made in the shape of an impeller, the inner diameter of the vanes of which is greater than the diameter of the hole of the inlet channel of the casing.

Also, Wiegand wire is used as the magnetic core of the inductance coil and its ends are each connected to one of the end caps (pole caps).

According to Version 2, the velocity flowmeter, which includes a casing consisting of a working chamber with tapered diffuser and confuser, inlet and outlet channels, a hydrodynamically suspended magnetised spherical rotor with a diameteric through- hole, and a converter of the number of revolutions of the rotor into electrical signals, while the casing is made of a dielectric material. The casing also contains a prechamber connected with the working chamber via the inlet channel; the said prechamber contains a stream swirler, while the rotor is made of a dielectric material and represents a rotary body with a thin-wall shell, the surface of which carries two galvanically connected electrodes, mounted on both sides of the axis of the hole in the rotor, while a ring-type magnet is fixed to the apex of the truncated cone of the rotor; the said magnet is magnetized along the axis of the ring, and four electrodes are fixed in the pairwise-symmetrical fashion in the area of workpace displacements of the rotor. The said four electrodes together with the two electrodes of the rotor form a velocity differential capacitive transducer.

The abovementioned aspects of the new method and of the velocity flowmeter structural features eliminate the drawbacks of the similar flowmeters and of the prototype.

The substance of the invention is illustrated by the drawings, where:
- Figure 1 shows the general arrangement of the velocity flowmeter, explaining the method of activating a velocity flowmeter by the stream, while suspending the flowmeter fluid(liquid/gas)-dynamically;
- Figure 2 shows a version of the structure of the rotor of a velocity flowmeter, shaped as a rotation body with a diametric through-hole, while the part of the surface of the rotation body facing the cone-shaped diffuser of the working chamber, is made in the shape of a truncated cone, which improves sensitivity to the varying velocity of the stream;
- Figure 3 shows the diffuser beyond the A-A section in Fig. 1;
- Figure 4 shows Version 1 of the structure of the hydro/gas-dynamically suspended velocity flowmeter, using an induction velocity transducer;
- Figure 5 shows the view in the direction indicated by the arrow B in Fig. 4.
- Figure 6 shows the C-C section in Fig. 1 for Version 2: with electrodes of the differential capacitive transducer;
- Figure 7 shows the structure of the thin-wall rotor of Version 2.
- Figure 8 shows the view along the direction indicated by the arrow D in Fig. 7
- Figure 9 shows the basic electrical diagram of the differential capacitive velocity transducer of revolution of the rotor as per Version 2.

The device used in Version 1 of the proposed method for activating the rotor of a velocity flowmeter by a stream that suspends the rotor hydrodynamically includes the casing 1 with prechamber 2 and working chamber 3, connected with each other via inlet channel 4 and outlet channel 5. The stream swirler 7 in the form of an impeller, the inner diameter of the vanes of which is bigger than the diameter of the inlet channel 4, is mounted on the cylindrical axis (shaft) 6 located in the prechamber 2 and extending into the working chamber 3. The working chamber 3 contains cone-shaped diffuser 8 and confuser 9, while the spherical rotor 10 (the diameter of hole 11 is bigger than the diameter of the shaft 6) is detachably mounted on the cantilever of cylindrical shaft 6. The casing 1 is of a split-type, made of a diamagnetic material; the shaft 6 and rotor 10 are also made of a diamagnetic material. The surface of rotor 10 facing diffuser 8 is made in the shape of truncated cone 12, with height **h** and taper angle a. Along the section ***l*** of the tapering surface of diffuser 8, which is of the same length as the distance from the inlet channel 4 and projection 13 of rotor 10 onto the tapering surface, curved grooves 14 are evenly distributed over the surface, and their direction coincides with the direction of the stream on the surface of the diffuser. These structural features subdivide the stream into equal portions and swirl these portions along such a trajectory that maintains the linear relationship between the rotor revolution frequency and velocity of the stream, evening out stream velocity in the space between the rotor and diffuser of the working chamber and, in addition to that, expands the range of the measurable stream velocities.

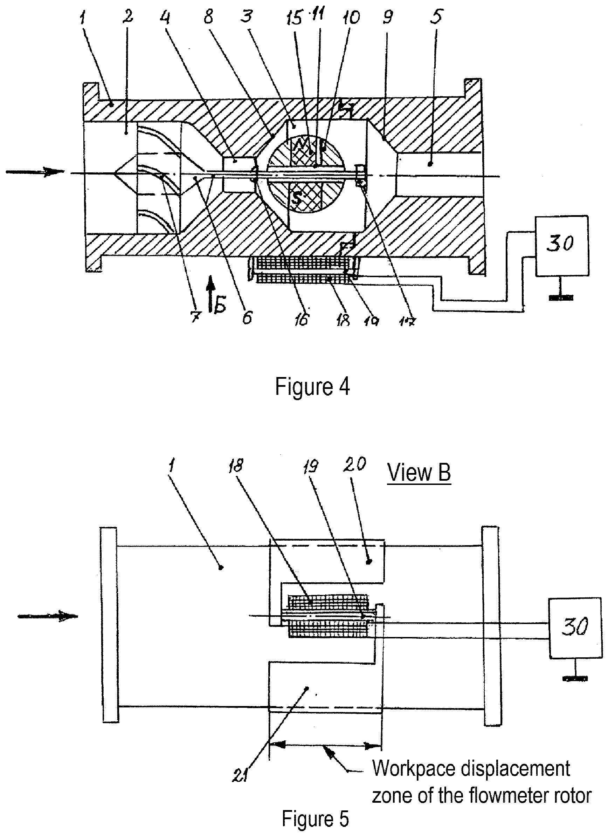

Version 1 of the velocity flowmeter, using an induction velocity transducer (Fig. 4) includes rotor 10, which contains permanent magnet 15, magnetized perpendicularly to the axis of hole 11, rings 16 (made out of a soft magnetic material) and 17 (made of a diamagnetic material), fixedly attached to the cylindrical shaft 6, inductance coil 18 wound around cylindrical core 19 made of a magnetically soft material (magnetic conductor) mounted on the diamagnetic casing 1, and two end caps (pole tips) 20 and 21, symmetrically placed in the rotor workpace displacements zone, made of a magnetically soft material, each connected with one of the ends of cylindrical core 19 and mounted on the outer surface of casing 1. The magnetic conductor of coll 18 can represent Wiegand wire, each ends of which is connected to one of the end caps (pole tips) 20 or 21. Using Wiegand wire results in that one receives output signals from the wound around it inductance coil 18 in the form of permanent amplitude and duration pulses irrespective of its re-magnetization frequency. Using ring 16 in this velocity flowmeter ensures that the rotor is pulled up to the point of its touching 5 the surface of diffuser 8, maintaining metrological performance of the velocity flowmeter irrespective of the stream direction in space with respect to the Earth gravity vector. Ring 17 limits the zone of rotor workpace displacements

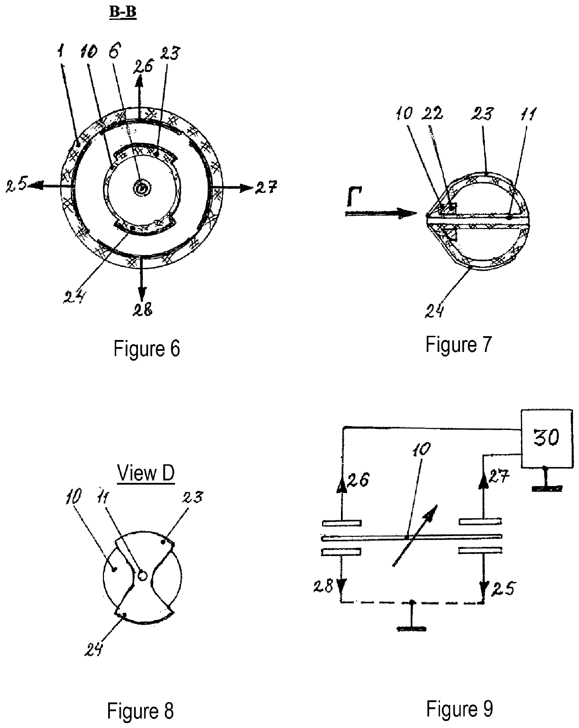

Version 2 of the velocity flowmeter includes rotor 10 (Fig. 7) made of a dielectric material in the form of a rotating body with a thin shell The part of its surface facing cone diffuser 8 of working chamber 3 has the shape of a truncated cone. Magnet 22. in the form of a ring magnetized along the axis of the hole 11 is fixedly attached to the tip of rotor 10. Two galvanically connected electrodes 23 and 24 are fixed to the surface of rotor 10 on both sides of the axis of hole 11, while rotor 10 works as a mobile part of the capacitive velocity transducer of the flowmeter. The stationary part of the capacitive velocity transducer of revolution of rotor 10 consists of plates 25, 26, 27 and 28, four electrodes placed in the area of rotor 10 workpace movements area, symmetrically mounted pairwise on casing 1 (Fig. 6).

### Velocity Flowmeter Operation

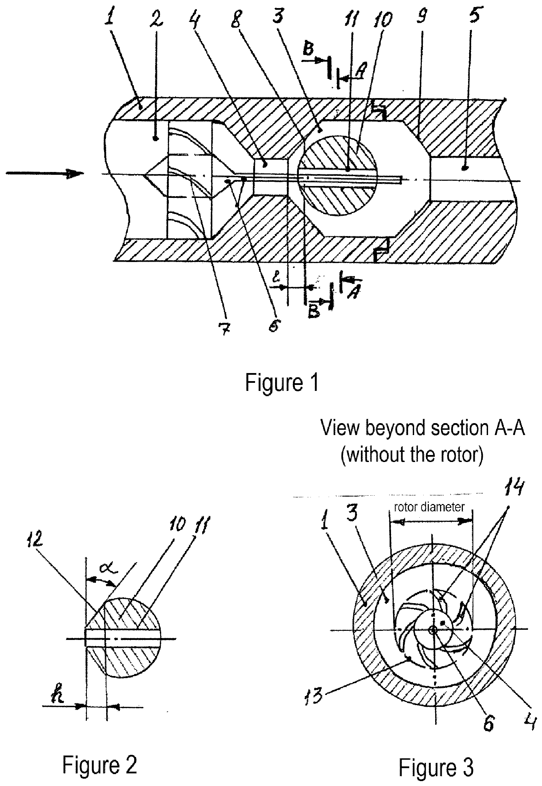

In the course of a flowing stream (Fig. 1), swirler 7 twists the flow around the cylindrical cantilever end of axis 6. The flow exits prechamber 2 via inlet channel 4 and, after passing through working chamber 3 it leaves the working chamber through outlet channel 5. Centrifugal forces spread the twisted flow across the surface of diffuser 8, producing a coneshaped vortex: rotor 10 revolves together with the vortex around the cylindrical cantilever of shaft 6. This produces different velocities in the longitudinal flow in front and behind rotor 10 in working chamber 3, so that in accordance with the Bernoulli equation, pressure rises behind the rotor and the stream is sucked into the cone vortex through the space between the cylindrical cantilever of axis (shaft) 6 and surface of hole 11 of rotor 10. thus accomplishing total hydro(gas) dynamic suspension of rotor 10 while equality between the lifting moment of the cone vortex and the opposing pressure is maintained throughout the entire range of working velocities of the medium. Rotor revolution speed, proportional to the stream velocity, is registered by block 30.

This method of hydro/gas-dynamic suspension of the sensor of a stream velocity flowmeter and the suggested versions of structural design of the flowmeter eliminate the drawbacks of the existing devices, namely: reducing hydraulic pressure, extending the area of working velocities of the stream, eliminating uneven revolution of the spherical rotor within a single revolution, limiting precession amplitude of its revolution axis and prevents resonant step-up of the spherical rotor in the working chamber.

This invention has been tested by its author on experimental samples of velocity flowmeters. The results of this testing were positive at different velocities of the flowing medium.

## Claims

1. A method of activating the rotor (10) of a velocity flowmeter by a stream, which keeps the rotor (10) hydro/gas-dynamically suspended, where the stream is directed through a working chamber (3), the cross section of which is bigger than the cross-sections of the inlet (4) or outlet (5) channels and which holds a spherical rotor (10) with a diametric through-hole (11),
**characterised in that**
prior to its passing into the working chamber (3), the stream is twisted with a swirler (7), then converted inside the working chamber (3) into a cone-shaped vortex, and the rotor (10) of the velocity flowmeter is placed inside the vortex and revolves together with the vortex around a cylindrical cantilever of a shaft (6) to reduce hydraulic resistance, prevent uneven rotation of the spherical rotor (10) within a single revolution, and to reduce precession of its rotation to the level preventing its resonant step-up in the working chamber (3).

2. A method of activating the rotor (10) of a velocity flowmeter by a stream as per Claim 1, **characterised in that**, in order to ensure stable rotation of the spherical rotor (10) by the stream when the velocities in the stream do not ensure stable revolving of the rotor (10), stream velocity is evened out in the space between the rotor (10) and diffuser (8) of the working chamber (3), then the stream is subdivided into equal parts and those parts are twisted along such trajectory that maintains a linear relationship between the rotor (10) revolution frequency and velocity of the stream.

3. A velocity flowmeter of a stream that includes a casing (1) holding a working chamber (3) with a cone-shaped diffuser (8), confuser (9), inlet (4) and outlet (5) channels, wherein the cross section of the working chamber (3) is bigger than the cross-sections of the inlet (4) or outlet (5) channels, a hydraulically suspended magnetised spherical rotor (10) with a diametric through-hole (11), located in the working chamber (3), and a transducer of the number of revolutions of the rotor (10) into electrical signals,
**characterised in that**
the velocity flowmeter is configured such that prior to its passing into the working chamber (3), the stream is twisted with a swirler (7), then converted inside the working chamber (3) into a cone-shaped vortex, and the rotor (10) of the velocity flowmeter is placed inside the vortex and revolves together with the vortex around a cylindrical cantilever of a shaft (6) to reduce hydraulic resistance, prevent uneven rotation of the spherical rotor (10) within a single revolution, and to reduce precession of its rotation to the level preventing its resonant step-up in the working chamber (3).

4. A velocity flowmeter as per Claim 3, **characterised in that** the casing (1) is made of a diamagnetic material, while containing a prechamber (2) connected with the working chamber (3) via an inlet channel (4), while the prechamber (2) contains the stream swirler (7), while the rotor (10) contains a permanent magnet (15), magnetised vertically to the axis of its diametric hole (11), and the stream swirler (7) and rotor (10) are mounted on the same axis formed as a cantilever-type cylindrical shaft (6) made of a diamagnetic material, which also carries two fixedly attached rings (16, 17), one of which is made of a diamagnetic material and is placed at the free end, while the other ring (16) is made of a soft magnetic material and is located in the area where the inlet channel (4) of the casing (1) is linked with the conical surface of the diffuser (8), and the diameter of the through-hole (11) of the rotor (10) is bigger than the diameter of the cylindrical shaft (6), and the outer surface of the casing (1) carries a fixedly attached inductance coil (18), wound around a magnetic conductor core (19), and two end caps (20, 21) of a soft magnetic material, fixed symmetrically in the area of rotor (10) workpace displacements, each of the rings (16, 17) connected to one of the ends of the core (19) magnetic conductor of the inductance coil (18).

5. A velocity flowmeter as per Claim 3 or 4, **characterised in that** the stream swirler (7) is formed as an impeller, the inner diameter of the vanes of which are bigger than the diameter of the hole of the inlet channel (4) of the casing (1).

6. A velocity flowmeter as per any of Claims 4 or 5, **characterised in that** the magnetic conductor core (19) of the inductance coil (18) is made as Wiegand wire, each end of which connected with one of the end caps (20, 21).

7. A velocity flowmeter as per Claim 3, **characterised in that** the casing (1) is made of a dielectric material, and the casing (1) contains a prechamber (2) connected with the working chamber (3) by means of an inlet channel (4), while the prechamber (2) contains the stream swirler (7), while a part of the surface of the rotor (10) facing the diffuser (8) is made in the shape of a truncated cone (12) and the rotor (10) is made of a dielectric material in the form of a rotation body with a thin-wall shell, the surface of which carries two galvanically linked electrodes (23, 24) fixed symmetrically with respect to the axis of the rotor hole (11), and a ring-shaped magnet (22) is fixed at the tip of the rotor (10) truncated cone (12), magnetised along the axis of the ring, and four electrodes (25, 26, 27, 28) are pairwise symmetrically fixedly mounted on the casing (1) in the zone of workpace displacements of the rotor (10), and these electrodes (25, 26, 27, 28), together with the two electrodes (23, 24) of the rotor (10) form a velocity differential capacitive transducer.

## Patentansprüche

1. Verfahren zum Aktivieren des Rotors (10) eines Geschwindigkeits-Durchflussmessers druch einen Strom, der den Rotor (10) hydro-/gasdynamisch aufgehängt hält, wobei der Strom durch eine Arbeitskammer (3) geleitet wird, deren Querschnitt größer ist als die Querschnitte des Einlass- (4) oder Auslasskanäle (5) und die einen sphärischen Rotor (10) mit diametraler Durchgangsöffnung (11) hält,
**dadurch gekennzeichnet, dass**
der Strom vor dem Eintritt in die Arbeitskammer (3) von einem Drallkörper (7) verwirbelt wird und in der Arbeitskammer (3) in einen kebelförmigen Vortex umgewandelt wird, und der Rotor (10) des Durchflussmessers in den Vortex eingeführt wird und sich zusammen mit dem Vortex um einen zylindrischen Freischwinger einer Welle (6) dreht, um den hydraulischen Widerstand zu reduzieren, eine ungleichmäßige Rotation des sphärischen Rotors (10) innerhalb einer Umdrehung zu verhindern und die Präzession seiner Rotation auf das Niveau, auf dem dessen resonante Steigerung in der Arbeitskammer (3) verhindert wird, zu reduzieren.

2. Verfahren zum Aktivieren des Rotors (10) eines Geschwindigkeits-Durchflussmessers durch einen Strom nach Anspruch 1, **dadurch gekennzeichnet, dass**, um die stabile Rotation des sphärischen Rotors (10) durch den Strom zu gewährleisten, wenn die Geschwindigkeiten im Strom keine stabile Umdrehung des Rotors (10) gewährleisten, die Fließgeschwindigkeit im Raum zwischen Rotor (10) und Diffusor (8) der Arbeitskammer (3) ausgeglichen wird und der Strom dann in gleiche Teile aufgeteilt wird und diese entlang einer derartigen Flugbahn gedreht werden,dass ein lineares Verhältnis zwischen der Drehzahl des Rotors (10) und der Geschwindigkeit des Stroms aufrechterhalten wird.

3. Geschwindigkeits-Durchflussmesser eines Stroms, umfassend ein Gehäuse (1), das eine Arbeitskammer (3) mit kegelförmigem Diffusor (8), Konfusor (9), Einlass- (4) und Auslasskanälen (5) hält, wobei der Querschnitt der Arbeitskammer (3) größer ist als die Querschnitte des Einlass- (4) bzw. Auslasskanals (5), einem hydraulisch aufgehängten magnetisierten sphärischen Rotor (10) mit einer in der Arbeitskammer (3) angeordneten diametralen Durchgangsöffnung (11) und einem Transducer zur Umwandlung der Drehzahl des Rotors (10) in elektrische Signale,
**dadurch gekennzeichnet, dass**
der Geschwindigkeits-Durchflussmesser derart konfiguriert ist, dass der Strom vor dem Eintritt in die Arbeitskammer (3) von einem Drallkörper (7) verwirbelt wird und in der Arbeitskammer (3) in einen kebelförmigen Vortex umgewandelt wird, und der Rotor (10) des Durchflussmessers in den Vortex eingeführt wird und sich zusammen mit dem Vortex um einen zylindrischen Freischwinger einer Welle (6) dreht, um den hydraulischen Widerstand zu reduzieren, eine ungleichmäßige Rotation des sphärischen Rotors (10) innerhalb einer Umdrehung zu verhindern und die Präzession seiner Rotation auf das Niveau, auf dem dessen resonante Steigerung in der Arbeitskammer (3) verhindert wird, zu reduzieren.

4. Geschwindigkeits-Durchflussmesser nach Anspruch 3, **dadurch gekennzeichnet, dass** das Gehäuse (1) aus diamagnetischem Material besteht und dabei eine Vorkammer (2) enthält, die mit der Arbeitskammer (3) über einen Einlasskanal (4) verbunden ist, während die Vorkammer (2) den Drallkörper (7) enthält, während der Rotor (10) einen Permanentmagneten (15) enthält, der vertical auf die Achse der diametralen Durchgangsöffnung (11) magnetisiert ist, Drallkörper (7) und Rotor (10) auf einer Achse montiert sind, die als freischwingerartige zylindrische Welle (6) ausgebildet ist, die aus diamagnetischem Material besteht, das auch zwei fest verbundene Ringe (16, 17) trägt, von denen einer aus einem diamagnetischen Material besteht und am freien Ende angeordnet ist, während der andere Ring (16) aus einem weichen magnetischen Material besteht und in dem Bereich angeordnet ist, wo der Einlasskanal (4) des Gehäuses (1) mit der kegelförmigen Oberfläche des Diffusors (8) verbunden ist und der Durchmesser der Durchgangsöffnung (11) des Rotors (10) größer ist als der Durchmesser der zylindrischen Welle (6) und die Außenfläche des Gehäuses (1) eine fest verbundene Induktionsspule (18), die um einen magnetischen Leiterkern (19) gewickelt ist, und zwei Endkappen (20, 21) aus weichem magnetischem Material trägt, die symmetrisch im Bereich von Geschwindigkeitsverschiebungen des Rotors (10) befestigt sind, wobei jeder der Ringe (16, 17) mit einem der Enden des magnetischen Leiterkerns (19) der Induktionsspule (18) verbunden ist.

5. Geschwindigkeits-Durchflussmesser nach Anspruch 3 oder 4, **dadurch gekennzeichnet, dass** der Drallkörper (7) als Laufrad ausgebildet ist, dessen Schaufeln einen Innendurchmesser aufweisen, der größer ist als der Durchmesser der Öffnung des Einlasskanals (4) des Gehäuses (1).

6. Geschwindigkeits-Durchflussmesser nach einem der Ansprüche 4 oder 5, **dadurch gekennzeichnet, dass** der magnetische Leiterkern (19) der Induktionsspule (18) aus Wieganddraht besteht, das an jedem Ende mit einer der Endkappen (20, 21) verbunden ist.

7. Geschwindigkeits-Durchflussmesser nach Anspruch 3, **dadurch gekennzeichnet, dass** das Gehäuse (1) aus einem dielektrischen Material besteht und das Gehäuse (1) eine Vorkammer (2) enthält, die über einen Einlasskanal (4) mit der Arbeitskammer (3) verbunden ist, während die Vorkammer (2) den Drallkörper (7) enthält, während ein dem Diffusor (8) zugewandter Teil der Oberfläche des Rotors (10) in Form eines Kegelstumpfes (12) vorliegt und der Rotor (10) aus einem dielektrischen Material in Form eines Rotationskörpers mit dünnwändiger Hülle besteht, deren Oberfläche zwei galvanisch verbundene Elektroden (23, 24) trägt, die in Bezug auf die Öffnung (11) des Rotors symmetrisch befestigt sind und ein ringförmiger Magnet (22) auf der Spitze des Kegelstumpfes (12) des Rotors (10) befestigt und entlang der Achse des Rings magnetisiert ist, vier Elektroden (25, 26, 27, 28) paarweise symmetrisch fest auf dem Gehäuse (1) im Bereich der Geschwindigkeitsverschiebungen des Rotors (10) montiert sind und dies Elektroden (25, 26, 27, 28) zusammen mit den zwei Elektroden (23, 24) des Rotors (10) einen kapazitiven Geschwindigkeitsdifferential-Transducer bilden.

## Revendications

1. Procédé pour activer le rotor (10) d'un débitmètre tachymétrique par un flux, qui maintient le rotor (10) suspendu par voie dynamiquement hydraulique / gazeuse, dans lequel le flux est dirigé à travers une chambre de travail (3), dont la section transversale est plus grande que les sections transversales des canaux d'entrée (4) ou de sortie (5) et qui maintient un rotor sphérique (10) avec un trou débouchant diamétral (11),
**caractérisé en ce que** :
avant son passage dans la chambre de travail (3), le flux est enroulé avec une coupelle rotative (7), converti ensuite à l'intérieur de la chambre de travail (3) en un tourbillon en forme de cône, et le rotor (10) du débitmètre tachymétrique est placé à l'intérieur du tourbillon et tourne conjointement avec le tourbillon autour d'un porte-à-faux cylindrique d'un arbre (6) pour réduire la résistance hydraulique, pour empêcher la rotation irrégulière du rotor sphérique (10) dans une seule révolution, et pour réduire la précession de sa rotation jusqu'au niveau empêchant son élévation de tension résonante dans la chambre de travail (3) .

2. Procédé pour activer le rotor (10) d'un débitmètre tachymétrique par un flux selon la revendication 1, **caractérisé en ce qu'**afin de garantir la rotation stable du rotor sphérique (10) par le flux lorsque les vitesses dans le flux ne garantissent pas la rotation stable du rotor (10), la vitesse de flux est nivelée dans l'espace entre le rotor (10) et le diffuseur (8) de la chambre de travail (3), ensuite le flux est divisé en parts égales et ces parties sont enroulées le long de cette trajectoire qui maintient une relation linéaire entre la fréquence de révolution du rotor (10) et la vitesse du flux.

3. Débitmètre tachymétrique d'un flux qui comprend un boîtier (1) contenant une chambre de travail (3) avec un diffuseur en forme de cône (8), un concentrateur (9), des canaux d'entrée (4) et de sortie (5), dans lequel la section transversale de la chambre de travail (3) est plus grande que les sections transversales des canaux d'entrée (4) ou de sortie (5), un rotor sphérique (10) magnétique suspendu par voie hydraulique avec un trou débouchant diamétral (11) positionné dans la chambre de travail (3) et un transducteur du nombre de révolutions du rotor (10) en signaux électriques,
**caractérisé en ce que** :
le débitmètre tachymétrique est configuré de sorte qu'avant son passage dans la chambre de travail (3), le flux est enroulé dans une coupelle rotative (7), converti ensuite à l'intérieur de la chambre de travail (3) en un tourbillon en forme de cône, et le rotor (10) du débitmètre tachymétrique est placé à l'intérieur du tourbillon et tourne conjointement avec le tourbillon autour d'un porte-à-faux cylindrique d'un arbre (6) pour réduire la résistance hydraulique, pour empêcher la rotation irrégulière du rotor sphérique (10) dans une seule révolution, et pour réduire la précession de sa rotation au niveau empêchant son élévation de tension résonnante dans la chambre de travail (3).

4. Débitmètre tachymétrique selon la revendication 3, **caractérisé en ce que** le boîtier (1) est réalisé avec un matériau diamagnétique, tout en contenant une pré-chambre (2) raccordée avec la chambre de travail (3) via un canal d'entrée (4), alors que la pré-chambre (2) contient la coupelle rotative de flux (7), alors que le rotor (10) contient un aimant permanent (15) verticalement magnétisé vers l'axe de son trou diamétral (11), et la coupelle rotative de flux (7) et le rotor (10) sont montés sur le même axe formé en tant qu'arbre cylindrique de type porte-à-faux (6) réalisé avec un matériau diamagnétique, qui porte également deux bagues fixées de manière fixe (16, 17), dont l'une est réalisée avec un matériau diamagnétique et est placée au niveau de l'extrémité libre, alors que l'autre bague (16) est réalisée avec un matériau magnétique souple et est positionnée dans la zone où le canal d'entrée (4) du boîtier (1) est relié à la surface conique du diffuseur (8), et le diamètre du trou débouchant (11) du moteur (10) est plus grand que le diamètre de l'arbre cylindrique (6) et la surface externe du boîtier (1) porte une bobine d'induction (18) fixée de manière fixe, enroulée autour d'un noyau conducteur magnétique (19), et deux capuchons d'extrémité (20, 21) d'un matériau magnétique, fixés de manière symétrique dans la zone des déplacements de travail de rotor (10), chacune des bagues (16, 17) étant raccordée à l'une des extrémités du conducteur magnétique à noyau (19) de la bobine à inductance (18).

5. Débitmètre tachymétrique selon la revendication 3 ou 4, **caractérisé en ce que** la coupelle rotative de flux (7) est formée comme une turbine, dont le diamètre interne des pales est plus grand que le diamètre du trou du canal d'entrée (4) du boîtier (1).

6. Débitmètre tachymétrique selon l'une quelconque des revendications 4 ou 5, **caractérisé en ce que** le noyau conducteur magnétique (19) de la bobine d'induction (18) est réalisé comme un fil de Wiegand, dont chaque extrémité est raccordée à l'un des capuchons d'extrémité (20, 21).

7. Débitmètre tachymétrique selon la revendication 3, **caractérisé en ce que** le boîtier (1) est réalisé avec un matériau diélectrique, et le boîtier (1) contient une pré-chambre (2) raccordée avec la chambre de travail (3) au moyen d'un canal d'entrée (4), alors que la pré-chambre (2) contient la coupelle rotative de flux (7), alors qu'une partie de la surface du rotor (10) faisant face au diffuseur (8) est réalisée selon la forme d'un cône tronqué (12) et le rotor (10) est réalisé avec un matériau diélectrique sous la forme d'un corps de rotation avec une coque à paroi fine, dont la surface porte deux électrodes reliées par voie galvanique (23, 24) fixées symétriquement par rapport à l'axe du trou de rotor (11), et un aimant en forme de bague (22) est fixé au niveau de la pointe du cône tronqué (12) du rotor (10), magnétisé le long de la bague, et quatre électrodes (25, 26, 27, 28) sont montées de manière fixe symétriquement en paire sur le boîtier (1) dans la zone des déplacements de travail du rotor (10), et ces électrodes (25, 26, 27, 28), conjointement avec les deux électrodes (23, 24) du rotor (10) forment un transducteur capacitif différentiel de vitesse.
